# EUROPÄISCHE PATENTSCHRIFT

(11) **EP 3 947 052 B1**
(45) Veröffentlichungstag und Bekanntmachung des Hinweises auf die Patenterteilung: **09.10.2024**
(21) Anmeldenummer: 20714158.1
(22) Anmeldetag: 18.03.2020
(51) Int. Cl.: B60R 21/0134

(54) **VERFAHREN ZUR DYNAMISCHEN FIXIERUNG**
METHOD FOR A DYNAMIC RESTRAINT
PROCÉDÉ DE DE FIXATION DYNAMIQUE

(30) Priorität: 29.03.2019 DE 102019002308
(43) Veröffentlichungstag der Anmeldung: 09.02.2022
(73) Patentinhaber: Mercedes-Benz Group AG, 70372 Stuttgart (DE)
(72) Erfinder: BOGENRIEDER, Ralf, 70565 Stuttgart (DE); MERZ, Uwe, 70195 Stuttgart (DE)
(74) Vertreter: Novagraaf Group
(86) Internationale Anmeldenummer: PCT/EP2020/057490
(87) Internationale Veröffentlichungsnummer: WO 2020/200793

(56) Entgegenhaltungen:
- WO-A1-2013/004342
- DE-A1- 102008 050 316
- DE-A1- 102009 033 689
- DE-A1- 102009 049 195

## Beschreibung

Die Erfindung betrifft ein Verfahren zur dynamischen Fixierung eines mit einem Sicherheitsgurt auf einem Fahrzeugsitz eines Fahrzeuges angeschnallten Insassen, wobei eine Querbeschleunigung des Fahrzeuges sowie ein dem Fahrzeug vorausliegender Straßenverlauf ermittelt werden.

Aus der DE 10 2008 050 316 A1 sind ein Verfahren und eine Vorrichtung zur dynamischen Fixierung eines mit einem Sicherheitsgurt in einem Sitz eines Fahrzeuges angeschnallten Fahrzeuginsassen bekannt. Dabei sieht das Verfahren vor, dass eine Querdynamik des Fahrzeuges bestimmt wird. Eine Gurtlose des Sicherheitsgurtes wird mittels eines Gurtaufrollers dann zumindest partiell aufgerollt, wenn ein oberer Schwellwert der Querdynamik überschritten wird und ein Kurvenradius eines vorausliegenden Straßenverlaufes konstant bleibt oder sich verringert.

Darüber hinaus ist aus der DE 10 2008 050 317 A1 ein Verfahren zur dynamischen Fixierung eines mit einem Sicherheitsgurt in einem Sitz eines Fahrzeuges angeschnallten Fahrzeuginsassen bekannt. Dabei sieht das Verfahren vor, dass eine Querdynamik des Fahrzeuges bestimmt wird. Eine Gurtlose des Sicherheitsgurtes wird mittels eines Gurtaufrollers dann zumindest partiell aufgerollt, wenn ein oberer Schwellwert der Querdynamik überschritten wird.

Weiterhin ist in der DE 10 2009 056 990 A1 ein Verfahren für eine fahrdynamische Adaption einer Insassenfixierung, welche durch eine Aktivierung von zumindest einem Mittel zur Insassenfixierung erfolgt, beschrieben, wobei durch das Verfahren ein Zeitpunkt für die Aktivierung bestimmt wird. Dabei werden Informationen über einen künftigen Straßenverlauf eines Navigationssystems sowie aktuelle Fahrzeugdaten berücksichtigt. In einem ersten Schritt werden anhand von Straßenverlaufsdaten und einer aktuellen Fahrzeugposition ein Kurvenverlauf und ein Kurvenbeginn des Kurvenverlaufes einer Kurve zunächst grob bestimmt. In einem zweiten Schritt wird eine genauere Bestimmung eines exakten Kurvenbeginnes und damit des Kurvenverlaufes durchgeführt, in dem der exakte Kurvenbeginn oder ein Abstand zu dem exakten Kurvenbeginn durch ein bildauswertendes Kamerasystem oder durch eine Strahlmessung bestimmt wird. Der Zeitpunkt für die Aktivierung der Insassenfixierung wird zudem abhängig gemacht von einer Zeitdauer, welche voraussichtlich benötigt wird, bis die Fahrzeugposition den exakten Kurvenbeginn erreichen wird.

Ferner offenbart die DE 10 2010 053 352 A1 ein Verfahren für eine fahrdynamische Adaption einer Insassenfixierung, welche durch eine Aktivierung von zumindest einem Mittel zur Insassenfixierung erfolgt, wobei durch das Verfahren ein Zeitpunkt für die Aktivierung unter Einbeziehung aktueller Fahrzeugdaten bestimmt wird. Das Verfahren sieht zudem vor, dass eine Bestimmung eines Kurvenbeginnes und eines Kurvenverlaufes durch ein bildauswertendes Kamerasystem oder durch eine Strahlmessung bestimmt werden. Der Zeitpunkt für die Aktivierung der Insassenfixierung wird abhängig gemacht von einer Zeitdauer, welche voraussichtlich benötigt wird, bis das Fahrzeug den Kurvenbeginn erreicht.

Ferner offenbart die WO 2013/004342 ein Verfahren nach dem Oberbegriff des Anspruchs 1.

Der Erfindung liegt die Aufgabe zugrunde, ein gegenüber dem Stand der Technik verbessertes Verfahren zur dynamischen Fixierung eines mit einem Sicherheitsgurt auf einem Fahrzeugsitz eines Fahrzeuges angeschnallten Insassen anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Ein Verfahren zur dynamischen Fixierung eines mit einem Sicherheitsgurt auf einem Fahrzeugsitz eines Fahrzeuges angeschnallten Insassen sieht vor, dass eine Querbeschleunigung des Fahrzeuges sowie ein dem Fahrzeug vorausliegender Straßenverlauf ermittelt werden. Erfindungsgemäß wird anhand mittels zumindest einer fahrzeugseitigen Kamera erfasster Bilddaten einer Fahrzeugumgebung und/oder anhand erfasster Daten einer Navigationskarte eine im Verlauf einer dem Fahrzeug vorausliegenden Kurve zu erwartende Querbeschleunigung prognostiziert, wobei im Fall, dass die prognostizierte Querbeschleunigung eine vorgegebene situationsabhängige Auslöseschwelle überschreitet, eine auf den Sicherheitsgurt wirkende Gurtkraft erhöht wird, bevor die Querbeschleunigung auf den Insassen wirkt.

Durch Anwendung des Verfahrens, d. h. durch eine präventive und situationsabhängige Gurtstraffung deutlich vor einer Einfahrt in eine Kurve, wird der Insasse haptisch vor Kurven gewarnt, in welchen eine erhöhte Querbeschleunigung zu erwarten ist. Dabei ist eine Plausibilität der Gurtstraffung, also der Erhöhung der Gurtkraft, durch die situationsabhängige Anpassung der Auslöseschwelle wesentlich verbessert.

Da der Insasse durch die Straffung des Sicherheitsgurtes bei der Zufahrt auf eine Kurve auf die bevorstehende erhöhte Querbeschleunigung aufmerksam gemacht wird, hat der Insasse, bei welchem es sich insbesondere um den Fahrer des Fahrzeuges handelt, die Möglichkeit zu bremsen und somit eine momentane Fahrgeschwindigkeit des Fahrzeuges zu verringern, wodurch eine womöglich vorliegende Unfallgefahr zumindest wesentlich verringert werden kann.

Dabei dient das Verfahren zur fahradaptiven Insassenfixierung, wodurch der Insasse im Fahrzeugsitz fixiert ist und somit einer seitlichen Verlagerung des Insassen im Fahrzeugsitz in Richtung einer Kurvenaußenseite entgegengewirkt wird.

Eine Ausführungsform des Verfahrens sieht vor, dass die Auslöseschwelle zur Erhöhung der Gurtkraft in Abhängigkeit eines eingestellten Fahrmodus, in Abhängigkeit erfasster Signale zumindest eines Regensensors, in Abhängigkeit einer Uhrzeit und/oder Umgebungshelligkeit, in Abhängigkeit einer Außentemperatur, in Abhängigkeit einer erfassten örtlichen Unfallhäufigkeit und/oder in Abhängigkeit ermittelter Informationen von Verkehrsschildern als Situation angepasst wird.

Es sind also mehrere situationsabhängige Auslöseschwellen hinterlegt, wobei diese situationsgerecht plausibel ausgelegt sind.

In einer weiteren Ausführungsform des Verfahrens wird eine beim Durchfahren einer dem Fahrzeug vorausliegenden Kurve auftretende maximale Querbeschleunigung prognostiziert, wobei bei Überschreiten der vorgegebenen situationsabhängigen Auslöseschwelle der Sicherheitsgurt mit einer vorgegebenen weiteren Gurtkraft eine vorgegebene Zeitspanne vor Erreichen der prognostizierten maximalen Querbeschleunigung gestrafft wird.

Liegt eine im Verlauf der Kurve zu erwartende maximale Querbeschleunigung an jenem Punkt der Kurve, welcher die höchste Krümmung aufweist, oberhalb der vorgegebenen Auslöseschwellen, dann ist vorgesehen, dass der Sicherheitsgurt bereits zu Beginn der Kurve, bevor eine messbare oder für den Insassen nennenswert spürbare Querbeschleunigung und damit eine seitliche Verlagerung des Insassen auftritt, gestrafft wird. Dabei wird der Sicherheitsgurt derart gestrafft, dass dieser vergleichsweise nah am Körper des Insassen anliegt. Durchfährt das Fahrzeug die Kurve und es wirkt eine bestimmte Querbeschleunigung auf das Fahrzeug, greift eine standardmäßig vorgeschriebene Gurtverriegelung, so dass sich eine Länge des Sicherheitsgurtes nicht ändern kann und die Gurtkraft sich passiv danach richtet, wie stark der Insasse durch die in Querrichtung wirkenden Trägheitskräfte in den Sicherheitsgurt gedrückt wird. Ein aktives Nachregeln, insbesondere ein aktives Straffen des Sicherheitsgurtes mit einer vorgegebenen Gurtkraft ist somit nicht erforderlich.

Im Fall einer einen vorgegebenen Schwellwert überschreitenden prognostizierten Querbeschleunigung beim Durchfahren der Kurve wird der Sicherheitsgurt in einer Weiterbildung mit einer vorgegebenen Gurtkraft gestrafft, wobei dann, wenn bei einem Durchfahren der Kurve ein höher liegender vorgegebener weiterer Schwellwert überschritten wird, der Sicherheitsgurt mit einer vorgegebenen höheren Gurtkraft gestrafft wird.

Beim Überschreiten des weiteren Schwellwertes wird der Sicherheitsgurt also mit einer spürbar höheren Gurtkraft gestrafft, wodurch der Insasse auf die Erhöhung der auf ihn wirkenden Querbeschleunigung aufmerksam gemacht wird.

In einer Weiterbildung des Verfahrens erfolgt die Straffung des Sicherheitsgurtes elektromotorisch, so dass die Straffung reversibel durchführbar ist.

Die maximale Querbeschleunigung wird in einer möglichen Ausführungsform beim Durchfahren einer Kurve anhand erfasster Krümmungsdaten und einer erfassten momentanen Fahrgeschwindigkeit des Fahrzeuges und/oder anhand eines Fahrertyps ermittelt.

Dabei wird ermittelt, wie sportlich die Kurve von dem Fahrzeug durchfahren wird und welche maximale Querbeschleunigung voraussichtlich zu erwarten ist. Es wird also anhand der Eigengeschwindigkeit des Fahrzeuges und/oder des Fahrertyps und der Krümmung der Kurve, d. h. der Fahrstrecke, die Querbeschleunigung ermittelt, die im Verlauf der zu durchfahrenden Kurve zu erwarten ist.

Weiterhin sieht das Verfahren vor, dass die erfassten Bilddaten der zumindest einen Kamera mittels der ermittelten Daten der Navigationskarte plausibilisiert werden und/oder dass die ermittelten Daten der Navigationskarte mittels der erfassten Bilddaten der zumindest einen Kamera plausibilisiert werden. Somit wird überprüft, welche Situation in der unmittelbaren Umgebung vorliegt, wobei zudem zumindest in Bezug auf die Daten der Navigationskarte überprüft wird, ob dem Fahrzeug eine Kurve vorausliegt.

Ausführungsbeispiele der Erfindung werden im Folgenden anhand von Zeichnungen näher erläutert.

Dabei zeigen:
- Fig. 1: schematisch ein Diagramm mit einer fest vorgegebenen Auslöseschwelle zur Straffung eines Sicherheitsgurtes eines Fahrzeuges nach dem Stand der Technik und
- Fig. 2: schematisch ein weiteres Diagramm mit einer Anzahl von situationsabhängigen Auslöseschwellen zur Straffung des Sicherheitsgurtes des Fahrzeuges.

Einander entsprechende Teile sind in allen Figuren mit den gleichen Bezugszeichen versehen.

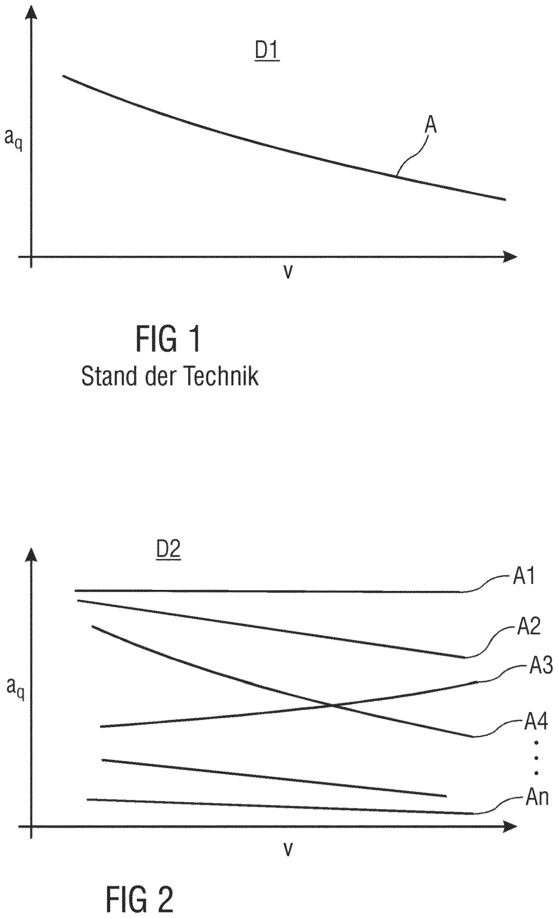

Figur 1 zeigt ein Diagramm D1 mit einer Auslöseschwelle A zur Straffung eines Sicherheitsgurtes eines Fahrzeuges bei einer Kurvenfahrt nach dem Stand der Technik.

Durchfährt das Fahrzeug eine Kurve und eine in Abhängigkeit einer Fahrzeuggeschwindigkeit v wirkende Querbeschleunigung a_{q} überschreitet die Auslöseschwelle A, wird der Sicherheitsgurt vergleichsweise leicht, also mit einer vergleichsweise geringen Gurtkraft, gestrafft. Dabei erfolgt die Straffung elektromotorisch, also reversibel.

Die Auslöseschwelle A ist dabei in Abhängigkeit der Fahrgeschwindigkeit v des Fahrzeuges fest vorgegeben und im Fahrzeug hinterlegt.

Anstatt mit der Straffung des Sicherheitsgurtes erst auf eine auf das Fahrzeug und somit seine Insassen bereits wirkende Querbeschleunigung a_{q} zu reagieren, ist vorgesehen, eine Gurtkraft präventiv zu erhöhen, bevor die relevante Querbeschleunigung a_{q} auf das Fahrzeug wirkt. D. h., dass der Sicherheitsgurt bereits bei einer Zufahrt des Fahrzeuges auf eine Kurve gestrafft wird. Durch die präventive Straffung des Sicherheitsgurtes wird ein Insasse, insbesondere ein Fahrer des Fahrzeuges, bei einer Zufahrt auf die Kurve haptisch gewarnt, wobei der Sicherheitsgurt dann gestrafft wird, wenn das Fahrzeug auf eine Kurve zufährt, in welcher eine erhöhte Querbeschleunigung a_{q} zu erwarten ist.

Hierzu werden Bilddaten zumindest einer fahrzeugseitigen Kamera und Daten zumindest einer im Fahrzeug hinterlegten Navigationskarte berücksichtigt, wobei die Bilddaten mit den Daten der Navigationskarte plausibilisiert werden und umgekehrt.

Zudem werden mehrere, in einem in Figur 2 gezeigten weiteren Diagramm D2 dargestellte Auslöseschwellen A1 bis An hinterlegt, so dass die Straffung des Sicherheitsgurtes, also die auf den Sicherheitsgurt wirkende Gurtkraft, situationsabhängig erfolgt.

Dabei dienen die Daten der Navigationskarte sowie die erfassten Bilddaten der Kamera insbesondere dazu, zu ermitteln, wo sich die nächste zu durchfahrende Kurve auf einem dem Fahrzeug vorausliegenden Straßenverlauf befindet. Es ist also bekannt, wann das Fahrzeug auf eine Kurve zufährt.

Anhand der Daten der Navigationskarte und/oder anhand der erfassten Bilddaten können zudem eine vorausliegende Kurve betreffende Krümmungsdaten ermittelt werden.

Diese Krümmungsdaten können dahingehend ausgewertet werden, dass ermittelt wird, wie weit das Fahrzeug von einem Scheitelpunkt der Kurve entfernt ist.

Weiterhin können die ermittelten Krümmungsdaten in Verbindung mit einer momentanen Fahrgeschwindigkeit v des Fahrzeuges dazu verwendet werden, einzuschätzen, wie sportlich die Kurve durchfahren werden wird und welche maximale Querbeschleunigung a_{q} beim Durchfahren der Kurve voraussichtlich zu erwarten ist. Alternativ oder zusätzlich kann anhand eines Fahrertyps ermittelt werden, wie sportlich die Kurve durchfahren wird und welche maximale Querbeschleunigung a_{q} dadurch wirkt.

Die Genauigkeit dieser Prognose kann insofern gesteigert werden, wenn eine momentane Längsbeschleunigung des Fahrzeuges bei der Ermittlung der maximalen Querbeschleunigung a_{q} berücksichtigt wird.

Mit anderen Worten wird anhand der Eigengeschwindigkeit des Fahrzeuges und der Krümmung eines dem Fahrzeug vorausliegenden Straßenverlaufes die Querbeschleunigung a_{q} ermittelt, die im Verlauf der zu durchfahrenden Kurve zu erwarten ist. Es wird also eine Querbeschleunigungsprognose erstellt.

Anhand der Daten der Navigationskarte, anhand der erfassten Bilddaten, anhand weiterer Situationsinformationen sowie anhand der Fahrgeschwindigkeit v des Fahrzeuges wird eine der vorliegenden Situation entsprechende Auslöseschwelle A1 bis An ermittelt, die der Straffung des Sicherheitsgurtes zugrunde gelegt wird, bevor die kurvenbedingte Querbeschleunigung a_{q} auf das Fahrzeug und somit auf die Insassen wirkt. D. h., dass der Sicherheitsgurt gestrafft wird, bevor das Fahrzeug in die Kurve fährt und dadurch die Querbeschleunigung a_{q} auf das Fahrzeug wirkt.

Eine erste Einflussgröße darstellende Situation für eine erste Auslöseschwelle A1 ist ein eingestellter Fahrmodus des Fahrzeuges, eine sogenannte Dynamik-Auswahl-Schalterstellung. Ist beispielsweise ein Sportmodus eingestellt, so liegt die erste Auslöseschwelle A1 zur Erhöhung der Gurtkraft vergleichsweise hoch.

Erfasste Signale eines Regensensors als Einflussgröße stellen eine Situation für eine zweite Auslöseschwelle A2 dar, wobei die zweite Auslöseschwelle A2 bei ermitteltem Regen niedriger liegt als die erste Auslöseschwelle A1. Dabei kann die zweite Auslöseschwelle A2 in Abhängigkeit einer ermittelten Niederschlagsstärke entsprechend abgestuft sein.

Eine weitere Einflussgröße bilden eine erfasste Uhrzeit oder eine erfasste Umgebungshelligkeit, wobei eine dritte Auslöseschwelle A3 bei Dunkelheit vergleichsweise niedrig verläuft.

Des Weiteren stellt eine Außentemperatur eine Einflussgröße zur Straffung des Sicherheitsgurtes dar, wobei eine vierte Auslöseschwelle A4 bei geringer Außentemperatur und der Gefahr von Straßenglätte durch Schnee und/oder Eis relativ niedrig angeordnet ist.

Wird ermittelt, dass sich das Fahrzeug in einer Umgebung mit örtlich erhöhter Unfallhäufigkeit befindet, so wird eine fünfte nicht explizit in Fig.2 dargestellte Auslöseschwelle A5 für potentiell gefährlichere Kurven ausgewählt und eingestellt, so dass der Sicherheitsgurt bei einer Zufahrt auf eine solche Kurve bereits gestrafft wird, um einen Fahrer des Insassen in Bezug auf die vorausliegende Kurve und die dadurch bedingte Querbeschleunigung a_{q} zu warnen. Die örtlich erhöhte Unfallhäufigkeit kann dabei anhand in einem sogenannten Unfallatlas gespeicherter Daten ermittelt werden.

In einer Ausführung des Verfahrens ist die Kamera Bestandteil eines Assistenzsystems zur Verkehrszeichenerkennung. Dadurch ist es möglich, eine sechste ebenfalls nicht explizit in Fig. 2 dargestellte Auslöseschwelle A6 zur Straffung des Sicherheitsgurtes zu hinterlegen, die in Abhängigkeit einer mittels eines Verkehrszeichens entsprechend abgebildeten Information eingestellt wird. Insbesondere wird die sechste Auslöseschwelle A6 eingestellt, wenn das Verkehrszeichen vor einer Kurve warnt und/oder mittels des Verkehrszeichens ein wesentlich reduziertes Geschwindigkeitslimit angegeben ist.

Alle dargestellte Kurven der Auslöseschwelle A1 bis An sind rein beispielhaft und sollen nur die Grundprinzipien näher erläutern. Des Weiteren können die Abhängigkeiten der unterschiedlichen Auslöseschwelle A1 bis An auch kombiniert werden, wobei dann die Auslöseschwellen auch beispielsweise als Kennfeld in Abhängigkeit verschiedener Parameter und der Kurvendurchfahrtgeschwindigkeit hinterlegt sein kann.

Wesentlich ist vor allem, dass die Auslöseschwelle einer Querbeschleunigung a_{q} in einer Kurve zur Gurtstraffung nicht nur geschwindigkeitsabhängig ist, sondern auch von anderen Parametern abhängen kann, die dann eben die Auslöseschwellen der Querbeschleunigung a_{q} erhöhen oder erniedrigen.

Durch die situationsabhängige präventive Straffung des Sicherheitsgurtes deutlich bevor das Fahrzeug in die Kurve fährt, wird der Fahrer des Fahrzeuges haptisch gewarnt, dass eine erhöhte Querbeschleunigung a_{q} zu erwarten ist.

Darüber hinaus ist durch Einstellung einer der jeweiligen Situation entsprechenden Auslöseschwelle A1 bis An eine solche Warnung für den Fahrer des Fahrzeuges plausibel.

Wie oben beschrieben, wird die maximale Querbeschleunigung a_{q} beim Durchfahren der Kurve ermittelt, wobei bei Überschreiten der vorgegebenen situationsabhängigen

Auslöseschwelle A1 bis An der Sicherheitsgurt mit einer vorgegebenen weiteren Gurtkraft eine vorgegebene Zeitspanne vor Erreichen der prognostizierten maximalen Querbeschleunigung a_{q} gestrafft wird. Dadurch ist der Insasse, insbesondere der Fahrer des Fahrzeuges, bei der Kurvenfahrt verbessert an seinen Fahrzeugsitz angebunden.

Weiterhin sieht das Verfahren vor, dass im Fall einer einen vorgegebenen Schwellwert überschreitenden prognostizierten Querbeschleunigung a_{q} beim Durchfahren der Kurve der Sicherheitsgurt mit einer vorgegebenen Gurtkraft gestrafft wird, wobei dann, wenn bei einem Durchfahren der Kurve ein höher liegender vorgegebener weiterer Schwellwert überschritten wird, der Sicherheitsgurt mit einer vorgegebenen höheren Gurtkraft gestrafft wird, so dass der Insasse beim Durchfahren der Kurve verbessert an seinem Fahrzeugsitz fixiert ist.

## Patentansprüche

1. Verfahren zur dynamischen Fixierung eines mit einem Sicherheitsgurt auf einem Fahrzeugsitz angeschnallten Insassen,
wobei eine Querbeschleunigung (a_{q}) des Fahrzeuges sowie ein dem Fahrzeug vorausliegender Straßenverlauf ermittelt werden,
- indem anhand mittels zumindest einer fahrzeugseitigen Kamera erfasster Bilddaten einer Fahrzeugumgebung und/oder anhand erfasster Daten einer Navigationskarte eine im Verlauf einer dem Fahrzeug vorausliegenden Kurve zu erwartende Querbeschleunigung (a_{q}) prognostiziert wird, und
- im Fall, dass die prognostizierte Querbeschleunigung (a_{q}) eine vorgegebene Auslöseschwelle zur Straffung des Sicherheitsgurtes überschreitet, eine auf den Sicherheitsgurt wirkende Gurtkraft erhöht wird, bevor die Querbeschleunigung (a_{q}) auf den Insassen wirkt
**dadurch gekennzeichnet, dass**
mehrere situationsabhängige Auslöseschwelle (A1 bis An) zur Erhöhung der Gurtkraft hinterlegt sind, wobei diese situationsgerecht plausibel ausgelegt sind und anhand weiterer Situationsinformationen sowie anhand der Fahrgeschwindigkeit (v) des Fahrzeuges eine der vorliegenden Situation entsprechende Auslöseschwelle (A1 bis An)
- in Abhängigkeit eines eingestellten Fahrmodus,
- in Abhängigkeit einer Uhrzeit und/oder Umgebungshelligkeit,
- in Abhängigkeit einer erfassten örtlichen Unfallhäufigkeit und/oder
- in Abhängigkeit ermittelter Informationen von Verkehrsschildern ermittelt wird.

2. Verfahren nach Anspruch 1,
**dadurch gekennzeichnet, dass**
die der vorliegenden Situation entsprechende Auslöseschwelle (A1 bis An) noch zusätzlich in Abhängigkeit erfasster Signale zumindest eines Regensensors und/oder in Abhängigkeit einer Außentemperatur ermittelt wird.

3. Verfahren nach Anspruch 1 oder 2,
**dadurch gekennzeichnet, dass**
eine beim Durchfahren einer dem Fahrzeug vorausliegenden Kurve auftretende maximale Querbeschleunigung (a_{q}) prognostiziert wird, wobei bei Überschreiten der vorgegebenen situationsabhängigen Auslöseschwelle (A1 bis An) der Sicherheitsgurt mit einer vorgegebenen weiteren Gurtkraft eine vorgegebene Zeitspanne vor Erreichen der prognostizierten maximalen Querbeschleunigung (a_{q}) gestrafft wird.

4. Verfahren nach einem der vorhergehenden Ansprüche,
**dadurch gekennzeichnet, dass**
im Fall einer einen vorgegebenen Schwellwert überschreitenden prognostizierten Querbeschleunigung (a_{q}) beim Durchfahren der Kurve der Sicherheitsgurt mit einer vorgegebenen Gurtkraft gestrafft wird, wobei dann, wenn bei einem Durchfahren der Kurve ein höher liegender vorgegebener weiterer Schwellwert überschritten wird, der Sicherheitsgurt mit einer vorgegebenen höheren Gurtkraft gestrafft wird.

5. Verfahren nach einem der vorhergehenden Ansprüche,
**dadurch gekennzeichnet, dass**
die Straffung des Sicherheitsgurtes elektromotorisch erfolgt.

6. Verfahren nach einem der Ansprüche 3 bis 5,
**dadurch gekennzeichnet, dass**
die maximale Querbeschleunigung (a_{q}) beim Durchfahren einer Kurve anhand erfasster Krümmungsdaten und einer erfassten momentanen Fahrgeschwindigkeit (v) des Fahrzeuges und/oder anhand eines Fahrertyps ermittelt wird.

7. Verfahren nach einem der vorhergehenden Ansprüche,
**dadurch gekennzeichnet, dass**
die erfassten Bilddaten der zumindest einen Kamera mittels der ermittelten Daten der Navigationskarte plausibilisiert werden und/oder dass die ermittelten Daten der Navigationskarte mittels der erfassten Bilddaten der zumindest einen Kamera plausibilisiert werden.

## Claims

1. Method for dynamically restraining a passenger strapped into a vehicle seat by means of a seat belt,
wherein a lateral acceleration (a_{q}) of the vehicle and the course of a road ahead of the vehicle are determined
- by predicting a lateral acceleration (a_{q}) to be expected over the course of a bend ahead of the vehicle on the basis of image data of a vehicle environment recorded by means of at least one vehicle-mounted camera and/or on the basis of recorded data of a navigation map, and
- in the event that the predicted lateral acceleration (a_{q}) exceeds a predefined trigger threshold for tightening the seat belt, a belt force acting on the seat belt is increased before the lateral acceleration (a_{q}) acts on the passenger
**characterized in that**
a plurality of situation-dependent trigger thresholds (A1 to An) for increasing the belt force are stored, wherein these are plausibly designed to suit the situation and, on the basis of further situation information and the driving speed (v) of the vehicle, a trigger threshold (A1 to An) corresponding to the current situation is determined
- according to a set driving mode,
- according to the time of day and/or ambient brightness,
- according to a recorded local accident frequency and/or
- according to information determined from traffic signs.

2. Method according to claim 1,
**characterized in that**
the trigger threshold (A1 to An) corresponding to the current situation is additionally determined according to recorded signals from at least one rain sensor and/or according to an outside temperature.

3. Method according to either claim 1 or claim 2,
**characterized in that**
a maximum lateral acceleration (a_{q}) occurring when driving through a bend ahead of the vehicle is predicted, wherein, if the predefined situation-dependent trigger threshold (A1 to An) is exceeded, the seat belt is tightened using a predefined additional belt force for a predefined period of time before the predicted maximum lateral acceleration (a_{q}) is reached.

4. Method according to any of the preceding claims,
**characterized in that**
in the event of a predicted lateral acceleration (a_{q}) exceeding a predefined threshold value when driving through the bend, the seat belt is tightened using a predefined belt force, wherein, if a higher predefined further threshold value is exceeded when driving through the bend, the seat belt is tightened using a predefined higher belt force.

5. Method according to any of the preceding claims,
**characterized in that**
the seat belt is tightened using an electric motor.

6. Method according to any of claims 3 to 5,
**characterized in that**
the maximum lateral acceleration (a_{q}) when driving through a bend is determined on the basis of recorded curvature data and a recorded instantaneous driving speed (v) of the vehicle and/or on the basis of a driver type.

7. Method according to any of the preceding claims,
**characterized in that**
the recorded image data of the at least one camera are checked for plausibility by means of the determined data of the navigation map and/or **in that** the determined data of the navigation map are checked for plausibility by means of the recorded image data of the at least one camera.

## Revendications

1. Procédé pour la fixation dynamique d'un occupant attaché sur un siège de véhicule par une ceinture de sécurité,
dans lequel une accélération transversale (a_{q}) du véhicule ainsi qu'un tracé de route précédant le véhicule sont déterminés,
- en pronostiquant, au moyen de données d'image d'un environnement du véhicule saisies au moyen d'au moins une caméra côté véhicule et/ou au moyen de données saisies d'une carte de navigation, une accélération transversale (a_{q}) attendue dans le tracé d'un virage précédant le véhicule, et
- dans le cas où l'accélération transversale (a_{q}) pronostiquée dépasse un seuil de déclenchement prédéterminé pour le serrage de la ceinture de sécurité, une force de ceinture agissant sur la ceinture de sécurité est augmentée avant que l'accélération transversale (a_{q}) n'agisse sur l'occupant
**caractérisé en ce que**
plusieurs seuils de déclenchement (A1 à An) dépendant de la situation sont mémorisés pour l'augmentation de la force de ceinture, dans lequel ceux-ci sont conçus de manière plausible en fonction de la situation et, au moyen d'autres informations de situation ainsi qu'au moyen de la vitesse de déplacement (v) du véhicule, un seuil de déclenchement (A1 à An) correspondant à la situation présente est déterminé
- en fonction d'un mode de conduite réglé,
- en fonction d'une heure et/ou de la luminosité ambiante,
- en fonction d'une fréquence locale d'accidents enregistrée et/ou
- en fonction des informations déterminées des panneaux de signalisation.

2. Procédé selon la revendication 1,
**caractérisé en ce que**
le seuil de déclenchement (A1 à An) correspondant à la situation présente est déterminé en outre en fonction de signaux détectés d'au moins un capteur de pluie et/ou en fonction d'une température extérieure.

3. Procédé selon la revendication 1 ou 2,
**caractérisé en ce**
**qu'**une accélération transversale (a_{q}) maximale se produisant lors du passage d'un virage précédant le véhicule est pronostiquée, dans lequel la ceinture de sécurité est serrée avec une force de ceinture supplémentaire prédéfinie pendant un laps de temps prédéfini avant d'atteindre l'accélération transversale (a_{q}) maximale pronostiquée en cas de dépassement du seuil de déclenchement (A1 à An) prédéfini dépendant de la situation.

4. Procédé selon l'une des revendications précédentes,
**caractérisé en ce que**
dans le cas d'une accélération transversale (a_{q}) pronostiquée dépassant une valeur seuil prédéfinie, la ceinture de sécurité est serrée avec une force de ceinture prédéfinie lors du passage du virage, dans lequel la ceinture de sécurité est alors serrée avec une force de ceinture prédéfinie plus élevée lorsqu'une autre valeur seuil prédéfinie plus élevée est dépassée lors du passage du virage.

5. Procédé selon l'une des revendications précédentes,
**caractérisé en ce que**
le serrage de la ceinture de sécurité est assuré par un moteur électrique.

6. Procédé selon l'une des revendications 3 à 5,
**caractérisé en ce que**
l'accélération transversale (a_{q}) maximale lors du passage d'un virage est déterminée au moyen de données de courbure détectées et d'une vitesse de déplacement (v) momentanée détectée du véhicule et/ou au moyen d'un type de conducteur.

7. Procédé selon l'une des revendications précédentes,
**caractérisé en ce que**
les données d'image saisies de l'au moins une caméra sont plausibilisées à l'aide des données déterminées de la carte de navigation et/ou **en ce que** les données déterminées de la carte de navigation sont plausibilisées à l'aide des données d'image saisies de l'au moins une caméra.
